# EUROPEAN PATENT SPECIFICATION

(11) **EP 3 478 448 B1**
(45) Date of publication and mention of the grant of the patent: **25.12.2024**
(21) Application number: 17821390.6
(22) Date of filing: 30.06.2017
(51) Int. Cl.: B24D 3/32, B24D 3/34, C09K 3/14, B24D 11/00, B24D 11/02, B24D 3/00, A47L 13/16, B24D 3/28

(54) **NONWOVEN ABRASIVE ARTICLE INCLUDING ABRASIVE PARTICLES**
NICHTGEWEBTER SCHLEIFARTIKEL MIT SCHLEIFPARTIKELN
ARTICLE ABRASIF NON TISSÉ COMPRENANT DES PARTICULES ABRASIVES

(30) Priority: 01.07.2016 US 201662357540 P
(43) Date of publication of application: 08.05.2019
(73) Proprietor: 3M Innovative Properties Company, St. Paul, MN 55133-3427 (US)
(72) Inventor: ALKHAS, Robinette S., Winnetka, CA 91306 (US); APPLE, Ronald D., Apple Valley, CA 92307 (US); HOLMES, Dean S., Ellsworth, WI 54011 (US); POLUHA, Laurie L., Woodbury, MN 55125 (US); MOREN, Louis S., Oakdale, MN 55128 (US)
(74) Representative: De Clercq & Partners
(86) International application number: PCT/US2017/040364
(87) International publication number: WO 2018/006012

(56) References cited:
- WO-A2-2010/075041
- US-A- 5 685 935
- US-A1- 2012 231 691
- US-A1- 2013 012 112
- US-A1- 2016 008 957
- US-A1- 2016 008 957
- US-A1- 2016 052 106

## Description

### BACKGROUND

Nonwoven abrasive articles generally have a nonwoven web (e.g., a lofty open fibrous web), abrasive particles, and a binder material (commonly termed a "binder") that bonds the fibers within the nonwoven web to each other and secures the abrasive particles to the nonwoven web. Nonwoven abrasive articles typically have abrasive particles distributed through layers of nonwoven fiber web bonded together with a binder material that bonds layers of nonwoven fiber web together, and likewise bonds the abrasive particles to the nonwoven fiber web. For example, unitary abrasive wheels have individual discs of nonwoven fiber web arranged in a parallel fashion to form a cylinder having a hollow axial core.

US 2012/231691 forms the basis for the preamble of claim 1.

### SUMMARY OF THE INVENTION

In various embodiments, the present invention provides a nonwoven abrasive article including a nonwoven web including fibers and pores between the fibers. The nonwoven abrasive article includes abrasive particles, wherein each of the pores between the fibers independently includes one or more of the abrasive particles. Each pore is independently about the same size as the one or more abrasive particles therein.

In various embodiments, the present invention provides a nonwoven abrasive article including a nonwoven web including fibers and pores between the fibers. The fibers in the nonwoven web including first fibers having a first diameter and second fibers having a second diameter. The nonwoven abrasive particle includes abrasive particles, wherein at least a portion of the pores between the fibers independently includes one or more of the abrasive particles. The first fibers have a denier of about 3. The second fiber have a denier of about 15. The first fibers are about 25 wt% of the fibers in the nonwoven web. The second fibers are about 75 wt% of the fibers in the nonwoven web.

In various embodiments, the present invention provides a nonwoven abrasive article including fibers and pores between the fibers. The nonwoven abrasive article includes abrasive particles, wherein at least a portion of the pores between the fibers independently includes one or more of the abrasive particles. Each of the pores is independently about the same size as the one or more abrasive particles therein. A 6.0-inch (15.2-cm) diameter 0.5-inch (1.27-cm) width test wheel having the same composition as the nonwoven abrasive article tested on 1/8-inch (0.32-cm) diameter carbon steel over 30 minutes, using 8 pounds (3.63 kg) of force, at 3600 rotations per minute, 15 seconds on and 15 seconds off, has a wear of about 2 g to about 5 g of the test wheel. A 6.0-inch (15.2-cm) diameter 0.5-inch (1.27-cm) width test wheel having the same composition as the nonwoven abrasive article tested on 1/8-inch (0.32-cm) diameter carbon steel over 30 minutes, using 8 pounds (3.63 kg) of force, at 3600 rotations per minute, 15 seconds on and 15 seconds off, has a cut of the carbon steel of about 30 g to about 50 g. The nonwoven abrasive article has a density of about 3 g/ in³ to about 23 g/ in³.

In various embodiments, the present invention provides a method of forming the nonwoven abrasive article. The method includes forming a prebond including a resin and the fibers. The method includes coating the abrasive particles onto the prebond. The method includes compressing the coated prebond. The method includes curing the compressed prebond, to provide the nonwoven abrasive article.

In various embodiments, the present invention provides a method of using the nonwoven abrasive article. The method includes abrading a substrate with the nonwoven abrasive article.

In various embodiments, the present nonwoven abrasive article has certain advantages over other nonwoven abrasive articles, at least some of which are unexpected. For example, in various embodiments, the nonwoven abrasive article of the present invention can have a better wear rate than other nonwoven abrasive articles. In various embodiments, the nonwoven abrasive article of the present invention can have a better cut rate than other nonwoven abrasive articles.

Some nonwoven abrasive articles including abrasive particles, such as shaped abrasive particles, can have high cut rates combined with high wear rates. For example, substituting shaped abrasive particles for crushed abrasive particles in nonwoven abrasive articles can result in increased cut rate but the same wear rate or an increased wear rate. In various embodiments, the present invention provides a nonwoven abrasive article including abrasive particles, such as shaped abrasive particles, having a high cut rate combined with a lower wear rate than other abrasive articles having a similar cut rate.

### BRIEF DESCRIPTION OF THE FIGURES

The drawings illustrate generally, by way of example, but not by way of limitation, various embodiments discussed in the present document.
FIG. 1 is a plot illustrating wear of the wheel sample versus wt% fiber in the prebond of the wheel, in accordance with various embodiments.
FIG. 2 is a plot illustrating cut of steel versus wt% fiber in the prebond of the wheel, for various sizes of abrasive particles, in accordance with various embodiments.
FIG. 3 illustrates normalized cut versus wt% fiber for various abrasive particles, in accordance with various embodiments.
FIG. 4 illustrates normalized wear versus wt% fiber for various abrasive particles, in accordance with various embodiments.
FIG. 5 illustrates normalized efficiency versus wt% fiber for various abrasive particles, in accordance with various embodiments.
FIGS. 6A-B illustrate photomicrographs of shaped abrasive particles and various compressed prebonds, in accordance with various embodiments.

### DETAILED DESCRIPTION OF THE INVENTION

Reference will now be made in detail to certain embodiments of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%.

### Nonwoven abrasive article.

In various embodiments, the present invention provides a nonwoven abrasive article. The nonwoven abrasive article includes a nonwoven web including fibers. The nonwoven web can include pores between the fibers. The nonwoven abrasive article includes abrasive particles. In one embodiment, at least a portion of the pores between the fibers can independently include one or more of the abrasive particles. Each pore can independently be about the same size as the one or more abrasive particles therein.

The nonwoven abrasive article can further include a binder. The binder can adhere the abrasive particles to the fibers of the nonwoven web. The binder can be any suitable binder. The binder can be a thermoplastic or thermoset material. The binder can be a phenolic resin, a urethane resin, hide glue, an acrylic resin, a urea-formaldehyde resin, a melamineformaldehyde resin, an epoxy resin, or a combination thereof. Urethane resins can include materials curable to form a poly(urea-urethane), such as polyurethanes having isocyanate functionality thereon curable with amine-containing materials.

The nonwoven abrasive article can include one compressed layer of the nonwoven web having abrasive particles therein, or can include two or more compressed and bonded layers of the nonwoven web having abrasive particles therein. For example, the nonwoven abrasive article can include 1-20, 1-10, 1, or less than, equal to, or greater than 2, 3, 4, 5, 6, 7, 8, 9, 10, 12, 14, 16, 18, or about 20 compressed and bonded layers of the nonwoven web having abrasive particles therein. The nonwoven abrasive article can be a unitized abrasive wheel designed to abrade a substrate contacted to the outer perimeter of the wheel when the wheel is turned around a hole in its center (e.g., an arbor hole), such as by using a suitable grinding or cutting machine.

The nonwoven abrasive article can have any suitable wear rate. In various embodiments, the nonwoven abrasive article can have a lower wear rate than other nonwoven abrasive articles having a similar cut rate. In some embodiments, a 6.0-inch (15.2-cm) diameter 0.5-inch (1.27-cm) width test wheel having the same composition as the nonwoven abrasive article tested on 1/8-inch diameter carbon steel over 30 minutes, using 8 pounds (3.63 kg) of force, at 3600 rotations per minute, 15 seconds on and 15 seconds off, has a wear of about 1 g to about 20 g of the test wheel, or about 2 g to about 5 g of the test wheel, or about 1 g or less, or less than, equal to, or greater than about 2, 2.5, 3, 3.5, 4, 4.5, 5, 6, 7, 8, 9, 10, 12, 14, 16, 18, or about 20 g or more.

The nonwoven abrasive article can have any suitable cut rate. In various embodiments a 6.0-inch (15.2-cm) diameter 0.5-inch (1.27-cm) width test wheel having the same composition as the nonwoven abrasive article tested on 1/8-inch (0.32-cm) diameter carbon steel over 30 minutes, using 8 pounds (3.63 kg) of force, at 3600 rotations per minute, 15 seconds on and 15 seconds off, cuts about 10 g to about 100 g of the carbon steel, or about 30 g to about 50 g, or about 35 g to about 45 g, or about 33 g to about 39 g, or about 10 g or less, or less than, equal to, or greater than about 15 g, 20, 22, 24, 26, 28, 30, 31, 32, 33, 34, 35, 36, 37, 38, 39, 40, 41, 42, 43, 44, 45, 46, 47, 48, 49, 50, 52, 54, 56, 58, 60, 65, 70, 75, 80, 85, 90, 95, or about 100 g or more.

The nonwoven abrasive article can have any suitable density, such as a density of at least about 1 g/ in³ to no greater than about 23 g/ in³, or at least about 7 g/ in³ to no greater than about 8 g/ in³, or about 1 g/ in³ or less, or less than, equal to, or greater than about 2 g/ in³, 3, 4, 5, 6, 6.2, 6.4, 6.6, 6.8, 7, 7.1, 7.2, 7.3, 7.4, 7.5, 7.6, 7.7, 7.8, 7.9, 8, 8.2, 8.4, 8.6, 8.8, 9, 10, 11, 12, 14, 16, 18, 20 or 23 g/ in³.

### Abrasive particles.

The nonwoven abrasive article includes abrasive particles. The abrasive particles can be any suitable abrasive particles. The abrasive particles can be irregularly shaped (e.g., crushed or ground particles) or shaped particles.

The abrasive particles can be formed from any suitable material. For example, the abrasive particles can include fused aluminum oxide based materials such as aluminum oxide, ceramic aluminum oxide (which may include one or more metal oxide modifiers and/or seeding or nucleating agents), and heat-treated aluminum oxide, silicon carbide, co-fused alumina-zirconia, diamond, ceria, titanium diboride, cubic boron nitride, boron carbide, garnet, flint, emery, sol-gel derived abrasive particles, and mixtures thereof. The abrasive particles may be in the form of, for example, individual particles, agglomerates, composite particles, and mixtures thereof.

The abrasive particles can be irregularly shaped. For example, the abrasive particles can be obtained by a crushing, grinding, or comminution process that produces abrasive particles of random size and shape. The particles can then be screened to give particles having a particular size range.

The abrasive particles can be shaped abrasive particles. A shaped abrasive particle means an abrasive particle having at least a partially replicated shape. One process to make a shaped abrasive particle includes shaping the precursor ceramic abrasive particle in a mold having a predetermined shape to make shaped abrasive particles. Shaped abrasive particles, formed in a mold, are one species in the genus of shaped abrasive particles. Other processes to make other species of shaped abrasive particles include extruding the precursor abrasive particle through an orifice having a predetermined shape, printing the precursor shaped abrasive particle though an opening in a printing screen having a predetermined shape, or embossing the precursor shaped abrasive particle into a predetermined shape or pattern. Non-limiting examples of shaped abrasive particles include triangular plates as disclosed in U.S. Pat. Nos. RE 35,570; 5,201,916; 5,984,998; 8,034,137; 8,123,828; 8,142,531; 8,142,532; and 8,142,891; and in in U.S. patent publications 2009/0169816, 2010/0146867, and 2010/0319269; or elongated ceramic rods/filaments often having a circular cross section produced by Saint-Gobain Abrasives an example of which is disclosed in U.S. Pat. No. 5,372,620. Shaped abrasive particles are generally homogenous or substantially uniform and maintain their sintered shape without the use of a binder such as an organic or inorganic binder that can bonds smaller abrasive particles into an agglomerated structure. Shaped abrasive particles can exclude particles that can be obtained by a crushing, grinding, or comminution process that produces abrasive particles of random size and shape. The shaped abrasive particles can have any suitable shape. The shaped abrasive particles can include a perimeter that is polygonal, and can include sides that are substantially flat. The shaped abrasive particle can include a perimeter that is triangular (e.g., equatorial, isosceles), rectangular, circular, elliptical, trapezoidal, pentagonal, star-shaped, or a combination thereof.

The abrasive particles can have any suitable particle size (e.g., largest dimension). In various embodiments, the abrasive particle can have a particle size of about 0.01 microns to about 2,000 microns, or about 10 microns to about 750 microns, or about 30 microns to about 150 microns, or about 0.01 microns or less, or less than, equal to, or greater than about 0.1 microns, 1, 2, 3, 4, 5, 6, 8, 10, 12, 14, 16, 18, 20, 25, 30, 35, 40, 45, 50, 55, 60, 65, 70, 75, 80, 85, 90, 95, 100, 110, 120, 130, 140, 150, 160, 170, 180, 190, 200, 220, 240, 260, 280, 300, 320, 340, 360, 380, 400, 450, 500, 550, 600, 650, 700, 750, 800, 900, 1,000, 1,500, or about 2,000 microns or greater.

### Fibers.

The nonwoven abrasive article includes a nonwoven web including fibers. The fibers can be made of any suitable material. For example, the fibers can be natural fibers, synthetic fibers, or mixtures of natural and synthetic fibers. Examples of synthetic fibers can include polyester, nylon, polypropylene, acrylonitrile, rayon, cellulose acetate, polyvinylidene chloride-vinyl chloride copolymers, vinyl chloride-acrylonitrile copolymers, or combinations thereof. Examples of suitable natural fibers include cotton, wool, jute, and hemp. The fiber may be of virgin material or of recycled or waste material, for example, reclaimed from garment cuttings, carpet manufacturing, fiber manufacturing, or textile processing. The fiber can be homogenous or a composite such as a bicomponent fiber (e.g., a co-spun sheath-core fiber). The fibers can be continuous filaments such as those formed by an extrusion process.

The fibers can have any suitable shape. The fibers can have a circular cross-section. In some embodiments, the fibers can have a non-circular cross sectional shape or can be a blends of fibers having a circular and a non-circular cross sectional shape. Non-circular cross sectional shapes can include triangular, delta, H-shaped, trilobal, rectangular, square, dog-bone, ribbon-shaped, and oval. The diameter of a fiber having a non-circular cross section is the largest dimension of the non-circular cross-section of the fiber. The fibers can have a substantially uniform diameter, wherein the largest dimension of the cross section of each fiber is substantially the same from one end of the fiber to the other.

The fibers in the nonwoven web can have a single diameter (e.g., a single uniform diameter). The nonwoven web can be substantially free of fibers have a different diameter than the single diameter. The single diameter can be about 0.01 denier (e.g., grams per 9,000 meters) to about 1,000 denier, or about 3 denier to about 40 denier, or about 0.01 denier or less, or less than, equal to, or greater than about 0.1 denier, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 42, 44, 46, 48, 50, 55, 60, 65, 70, 75, 80, 85, 90, 95, 100, 110, 120, 130, 140, 150, 175, 200, 225, 250, 275, 300, 350, 400, 450, 500, 600, 700, 800, 900, or about 1,000 denier or more.

In some embodiments, the fibers in the nonwoven web can have more than one diameter. For example, the fibers in the nonwoven web can include first fibers having a first diameter (e.g., a first uniform diameter), and second fibers having a second diameter (e.g., second uniform diameter), wherein the first diameter is different than the second diameter. In various embodiments, the fibers in the nonwoven web can include any suitable number of diameters, such as further including third fibers having a third diameter, fourth fibers having a fourth diameter, and the like.

In a nonwoven web including first fibers and second fibers, the first fibers can form any suitable proportion of the fibers in the nonwoven web. For example, the first fibers can be about 0.001 wt% to about 99.999 wt% of the fibers in the nonwoven web, or about 10 wt% to about 50 wt%, or about 15 wt% to about 40 wt%, or about 0.001 wt% or less, or less than, equal to, or greater than about 0.01 wt%, 0.1, 1, 2, 3, 4, 5, 6, 8, 10, 12, 14, 15, 16, 17, 18, 19, 20, 21, 22, 23, 24, 25, 26, 27, 28, 29, 30, 31, 32, 33, 34, 35, 36, 37, 38, 39, 40, 42, 44, 46, 48, 50, 55, 60, 65, 70, 75, 80, 85, 90, 95, 96, 97, 98, 99, 99.9, 99.99 wt%, or about 99.999 wt% or more of the fibers in the nonwoven web. The first fibers can be about 0.01 denier to about 1,000 denier, or about 3 denier to about 40 denier, or about 0.01 denier or less, or less than, equal to, or greater than about 0.1 denier, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 42, 44, 46, 48, 50, 55, 60, 65, 70, 75, 80, 85, 90, 95, 100, 110, 120, 130, 140, 150, 175, 200, 225, 250, 275, 300, 350, 400, 450, 500, 600, 700, 800, 900, or about 1,000 denier or more. The first fibers can be about 3 denier.

In a nonwoven web including first fibers and second fibers, the second fibers can form any suitable proportion of the fibers in the nonwoven web. For example, the second fibers can be about 0.001 wt% to about 99.999 wt% of the fibers in the nonwoven web, or about 50 wt% to about 90 wt%, or about 65 wt% to about 85 wt%, or about 0.001 wt% or less, or less than, equal to, or greater than about 0.01 wt%, 0.1, 1, 2, 4, 6, 8, 10, 15, 20, 25, 30, 35, 40, 45, 50, 52, 54, 56, 58, 60, 61, 62, 63, 64, 65, 66, 67, 68, 69, 70, 71, 72, 73, 74, 75, 76, 77, 78, 79, 80, 81, 82, 83, 84, 85, 86, 88, 90, 95, 96, 97, 98, 99, 99.9, 99.99 wt%, or about 99.999 wt% or more of the fibers in the nonwoven web. The second fibers can be about 0.01 denier to about 1,000 denier, or about 3 denier to about 40 denier, or about 0.01 denier or less, or less than, equal to, or greater than about 0.1 denier, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 42, 44, 46, 48, 50, 55, 60, 65, 70, 75, 80, 85, 90, 95, 100, 110, 120, 130, 140, 150, 175, 200, 225, 250, 275, 300, 350, 400, 450, 500, 600, 700, 800, 900, or about 1,000 denier or more. The second fibers can be about 15 denier, or about 40 denier.

In a nonwoven web including first fibers and second fibers, the first fibers can have a smaller diameter than the second fibers. For example, the first fibers can have a denier that is about 1 denier to about 500 denier less than the second fibers, or about 5 denier to about 50 denier less than the second fibers, or about 1 denier or less, or less than, equal to, or greater than about 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 42, 44, 46, 48, 50, 55, 60, 65, 70, 75, 80, 85, 90, 95, 100, 110, 120, 130, 140, 150, 175, 200, 225, 250, 275, 300, 350, 400, 450, or about 500 denier or more.

In some embodiments, the nonwoven web includes first fibers having a denier or about 3 that are about 25 wt% of the fibers in the nonwoven web, and second fibers having a denier of about 15 that are about 75 wt% of the fibers in the nonwoven web. In some embodiments, the nonwoven web can be substantially free of fibers other than the first fibers and second fibers.

### Pores.

The fibers of the nonwoven web include pores that are spaces in-between groups of fibers. The fibers forming a pore can be characterized as a cage around the pore, wherein the fibers forming the pore do not seal the pore off from the surrounding environment. Some or each of the pores between the fibers can independently include one or more of the abrasive particles, such that the one or more abrasive particles in the pore are in the interior of the cage formed by the fibers that form the pore. Each pore can independently be about the same size as the one or more abrasive particles therein. In addition to the pores that include abrasive particles, the nonwoven web can also include pores that are free of abrasive particles.

A pore can include one abrasive particle, or more than one abrasive particle. In some embodiments, the pores of the nonwoven abrasive article can include not more than one of the abrasive particles (e.g., the pore can include zero or one particle). In some embodiments, the pores of the nonwoven abrasive article can include not more than one of the abrasive particles and can be free of other abrasive particles. In some embodiments, the nonwoven abrasive article can include secondary pores between the fibers. In some embodiments, the secondary pores can be pores of the same or smaller size than the other pores. The secondary pores between the fibers can be free of abrasive particles.

In various embodiments, the one or more abrasive particles in each pore can independently have a volume that is any suitable proportion of the volume of the pore, wherein the volume of the pore can be considered to be the maximum volume of any shape that does not protrude from the boundary of the pore that the pore can accommodate. The one or more abrasive particles in each pore can independently have a volume that is about 50% to about 100% of the volume of the pore, or about 90% to about 100% of the volume of the pore, or about 50% or less, or less than, equal to, or greater than about 55%, 60, 65, 70, 75, 80, 85, 90, 92, 94, 96, 97, 98, 99, 99.9, 99.99, or about 99.999% or more of the volume of the pore. In various embodiments, any suitable proportion of the total number of pores in the nonwoven abrasive article having a volume that is larger than the abrasive particle can include one or more abrasive particles, such as about 1% to about 100%, or about 50% to about 100%, or about 80% to about 100%, or about 1% or less, or less than, equal to, or greater than about 2%, 3, 4, 5, 10, 15, 20, 25, 30, 35, 40, 45, 50, 55, 60, 65, 70, 75, 80, 85, 90, 91, 92, 93, 94, 95, 96, 97, 98, 99, 99.9, 99.99, or 99.999% or more.

The pores can be substantially conformed to the one or more abrasive particles therein. The abrasive particles can include one or more substantially flat faces (e.g., the abrasive particles can be shaped abrasive particles or can be randomly shaped particles including one or more substantially flat faces). The substantially flat face of the abrasive particle can be contacted by (e.g., directly contacted by or separated by binder that is less than 1 fiber diameters thick) one or more of the fibers of the nonwoven web that are substantially parallel to the flat face, such that the contacting fibers is flush and adjacent to the substantially flat face. Any suitable proportion of the surface area of substantially flat faces of the abrasive particle can be contacted by one or more of the parallel fibers (e.g., wherein the percentage given represents the percentage of the total surface area of all the flat faces contacted per particle), such as about 10% to about 100%, or about 20% to about 80%, or about 10% or less, or about 15%, 20, 25, 30, 35, 40, 45, 50, 55, 60, 65, 70, 75, 80, 85, 90, 95, 96, 97, 98, 99, 99.9, 99.99, or about 100%.

### Other components.

The nonwoven abrasive article can include any suitable component. The nonwoven abrasive article can include or can be free of any material listed in this section.

The nonwoven abrasive article can include a surfactant, an emulsifier, a dispersant, a crosslinking agent, a catalyst, a rheology modifier, a density modifier, a cure modifier, a free radical initiator, a diluent, an antioxidant, a heat stabilizer, a flame retardant, a plasticizer, filler, an inorganic particle, a pigment, a dye, an adhesion promoter, antistatic additives, or a combination thereof.

In some embodiments, the nonwoven abrasive article can include filler particles. For example, the filler particles can be blended with the shaped abrasive particles. Examples of useful fillers for this invention can include metal carbonates (such as calcium carbonate, calcium magnesium carbonate, sodium carbonate, magnesium carbonate), silica (such as quartz, glass beads, glass bubbles and glass fibers), silicates (such as talc, clays, montmorillonite, feldspar, mica, calcium silicate, calcium metasilicate, sodium aluminosilicate, sodium silicate), metal sulfates (such as calcium sulfate, barium sulfate, sodium sulfate, aluminum sodium sulfate, aluminum sulfate), gypsum, vermiculite, sugar, wood flour, aluminum trihydrate, carbon black, metal oxides (such as calcium oxide, aluminum oxide, tin oxide, titanium dioxide), metal sulfites (such as calcium sulfite), thermoplastic particles (such as polycarbonate, polyetherimide, polyester, polyethylene, poly(vinylchloride), polysulfone, polystyrene, acrylonitrile-butadiene-styrene block copolymer, polypropylene, acetal polymers, polyurethanes, nylon particles) and thermosetting particles (such as phenolic bubbles, phenolic beads, polyurethane foam particles and the like). The filler may also be a salt such as a halide salt. Examples of halide salts include sodium chloride, potassium cryolite, sodium cryolite, ammonium cryolite, potassium tetrafluoroborate, sodium tetrafluoroborate, silicon fluorides, potassium chloride, and magnesium chloride. Examples of metal fillers include, tin, lead, bismuth, cobalt, antimony, cadmium, iron and titanium. Other fillers can include sulfur, organic sulfur compounds, graphite, lithium stearate, and metallic sulfides.

### Method of making nonwoven abrasive article.

Various embodiments of the present invention provide a method of making the nonwoven abrasive article. The method can be any suitable method that generates an embodiment of the nonwoven abrasive article described herein.

The method can include forming a prebond including resin, fibers, and abrasive particles. The method can include compressing multiple prebonds together, followed by curing the compressed prebonds, to form the nonwoven abrasive article.

In some embodiments, the method can include forming a prebond that includes resin and fibers. The method can include coating abrasive particles onto the prebond. The method can include compressing the coated prebond. The method can include curing the compressed prebond, to provide the nonwoven abrasive article.

### Method of using the nonwoven abrasive article.

In various embodiments, the present invention provides a method of using the nonwoven abrasive article. The method can be any suitable method of using an embodiment of the nonwoven abrasive article described herein. The method can include abrading a substrate with an embodiment of the nonwoven abrasive article described herein.

### Examples

Various embodiments of the present invention can be better understood by reference to the following Examples which are offered by way of illustration. The present invention is not limited to the Examples given herein.

Materials used in the Examples are described in Table 1. Unless otherwise noted, all parts, percentages, ratios, etc. in the Examples and the rest of the specification are by weight. Unless stated otherwise, all other reagents were obtained, or are available from fine chemical vendors such as Sigma-Aldrich Company, St. Louis, Missouri, or may be synthesized by known methods.

**Table 1. Materials.**

| **ABBREVIATION** | **DESCRIPTION** |
|---|---|
| AF | silicone antifoam available under the trade designation "DOW CORNING ANTIFOAM 1520 - US" from Dow Corning Corp., Midland, Michigan |
| CARBEZ3 | rheology modifier available under the trade designation "CARBOPOL EZ-3 POLYMER" from Noveon, Inc., Cleveland, Ohio |
| CARBEZ3S | 5 weight percent solution of CARBEZ3 in water |
| CUBITRON | Crush ceramic aluminum oxide, obtained under the trade designation "321 CUBITRON 120X CRUSHED GRAIN" from 3M Company, Saint Paul, Minnesota |
| EP1 | epoxy resin available under the trade designation "EPI-REZ 3510-W-60" from Resolution Performance Products, Houston, Texas |
| FIB1 | 15 denier high tenacity nylon 6,6 crimp set fiber with a staple length of 1.5 inches (3.81 centimeters), obtained under the trade designation "NEXYLON PA 6.6 STAPLE FIBRES" from EMS-CHEMIE GmbH & Co. KG, Neumuenster, Germany |
| FIB2 | 3 denier nylon 6,6 crimp set fiber with a staple length 1.5", obtained under the trade designation "TYPE 881" from Invista S.A.R.L., Wichita, Kansas |
| LCD4115 | carbon black dispersion available under the trade designation "LCD-4115 SPECIALTY CARBON BLACK DISPERSION" from Sun Chemical Corporation, Amelia, Ohio |
| LiSt | lithium stearate |
| LiStS | 44.7 weight percent solution of lithium stearate available under the trade designation "LITHIUMSOAP 1" from Baerlocher, Cincinnati, Ohio, in PMA |
| RESIN SYSTEM | Urethane resin system including fillers and lubricants |
| SAP1 | Shaped abrasive particles were prepared according to the disclosure of U.S. Patent 8,142,531. The shaped abrasive particles were prepared by molding alumina sol gel in equilateral triangleshaped polypropylene mold cavities. After drying and firing, the resulting shaped abrasive particles were about 0.33 millimeter (side length) × 0.10 millimeter thick, with a draft angle approximately 98 degrees. |
| SAP2 | Shaped abrasive particles were prepared according to the disclosure of U.S. Patent 8,142,531. The shaped abrasive particles were prepared by molding alumina sol gel in equilateral triangleshaped polypropylene mold cavities. After drying and firing, the resulting shaped abrasive particles were about 0.26 millimeter (side length) × 0.06 millimeter thick, with a draft angle approximately 98 degrees. |
| SAP3 | Shaped abrasive particles were prepared according to the disclosure of U.S. Patent 8,142,531. The shaped abrasive particles were prepared by molding alumina sol gel in equilateral triangleshaped polypropylene mold cavities. After drying and firing, the resulting shaped abrasive particles were about 0.20 millimeter (side length) × 0.05 millimeter thick, with a draft angle approximately 98 degrees. |
| SAP4 | Shaped abrasive particles were prepared according to the disclosure of U.S. Patent 8,142,531. The shaped abrasive particles were prepared by molding alumina sol gel in equilateral triangleshaped polypropylene mold cavities. After drying and firing, the resulting shaped abrasive particles were about 0.18 millimeter (side length) × 0.04 millimeter thick, with a draft angle approximately 98 degrees. |
| SiC | Silane treated 150 grit silicon carbide abrasive particles available under the trade designation "150 SIC CARBOREX C-6 SILKOTE", from Washington Mills Electro Minerals Group, Niagara Falls, New York |
| T403 | polyetheramine available under the trade designation "JEFFAMINE T-403 POLYETHERAMINE" from Huntsman International LLC, Salt Lake City, Utah |
| T403LiSt | mixture of 66.7 weight percent T403 and 33.3 weight percent LiSt |
| T403S | 25 weight percent solution of T403 in water |

### Example 1. Production of unitized wheels.

Preparation of prebonds. A nonwoven web was formed on an air laid fiber web forming machine, available under the trade designation "RANDO-WEBBER" from the Rando Machine Corporation of Macedon, New York. The fiber web was formed from fiber blends shown in Table 4. The weight of the web was approximately 84 grams per square meter (gsm). The web was conveyed to a horizontal, two-roll coater, where a prebond resin was applied at a wet add-on weight of 146 gsm. The prebond resin had the following composition (all percentages relative to component weight): 44.4% water, 28.0% T403S, 18.7% EP1, 0.5% AF, 1% LCD4115, 2.9% T403LiSt, 4.5% CARBEZ3S. The prebond resin was cured to a non-tacky condition by passing the coated web through a convection oven at 345 °F (174 °C) for 3 minutes, yielding a prebonded, nonwoven web of having a basis weight of 117 gsm.

A slurry was prepared, including precision shaped abrasive particles, with the slurry having the formula described in Table 2. The slurry was prepared in batches with a weight of about 13.61 Kg to about 15.88 Kg using an air-powered high-shear mixer with the speed adjusted to generate a strong vortex in the slurry while mixing. The component order of addition was in the sequence listed in Table 2.

**Table 2. Slurry formula.**

| **Material Amounts in Pounds** | | | | | |
|---|---|---|---|---|---|
| **Raw Material** | Wheel ID | | | | |
| | | | Sample 1B | Sample 4B | |
| | Sample 8B | | | Sample 5B | |
| | | | | Sample 1A | |
| | Sample 5A | | | | Sample 9A |
| | | | | Sample 2A | Sample 10A |
| | Sample 6A | | | | |
| | | Sample 6B | | Sample 3A | Sample 11A |
| | Sample 7A sample 8A | | Sample 2B | | |
| | | Sample 7B | Sample 3B | Sample 4A | Sample 12A |
| | | | Sample 12A | | |
| RESIN SYSTEM | 17.25 | 17.25 | 17.25 | 17.25 | 17.25 |
| SiC | 6.34 | 6.34 | 6.34 | 6.34 | 6.34 |
| SAP 1 | 6.34 | | | | |
| SAP 2 | | 6.34 | | | |
| SAP 3 | | | 6.34 | | |
| SAP 4 | | | | 6.34 | |
| Cubitron | | | | | 6.34 |

Unitized abrasive wheels were prepared from the prebonded nonwoven web as follows. A 10-inch (25-centimeter) × 12-inch (30- centimeter) section was cut from the prebonded, nonwoven web and saturated with abrasive slurry. The saturated prebonded web was then passed through the nip of a roll coater, consisting of 10-inch (25- centimeter) diameter rubber rolls of 85-Shore A durometer hardness, to remove excess slurry until the desired slurry add-on weight of 1783 gsm was obtained. Typically, the web passes through the nip at 5 feet per minute (1.52 meters per minute) under pressures of 10-25 psi (69-172 kilopascal) to reach the target weight. Four sections of prebonded web were coated with the slurry in the above manner. The coated sections of prebonded web were placed in a forced air oven set at 90 °F (32 °C) for 5 minute to remove a majority of the solvent. In order to form a single, unitized slab of nonwoven, abrasive material, the four sections were then stacked one on top of the other and placed in a hydraulic, heated platen press set at 275 °F (135 °C). A release liner was placed on both sides of the stack, prior to placing it in the oven. Consistent thickness of the unitized slab was maintained by placing 0.5 inch (1.27 centimeters) thick metal spacers in each corner of the platen. Pressure (15,000 psi, 103.4 megapascal), was applied to the platens. After 30 minutes, the two sections of web had fused together into a single, unitized slab. This slab was placed in a forced air oven set at 275 °F (135 °C) for 180 minutes. After removal from the oven, the slab was cooled to room temperature, and a 6.0-inch (15.24-centimeter) diameter 0.5-inch (1.27-centimeter) thick unitized abrasive wheel with a 1-inch (2.54-centimeter) center hole was die cut from it using a SAMCO SB-25 swing beam press manufactured by Deutsche Vereinigte Schuhmaschinen GmbH & Co., Frankfurt, Germany. The samples prepared are described in Table 3.

**Table 3. Sample wheels prepared in Example 1.**

| **Wheel** | **FIB1 (wt% of total fiber)** | **FIB2 (wt% of total fiber)** | **Abrasive Particle** |
|---|---|---|---|
| Sample 1A | 100 | 0 | SAP4 |
| Sample 2A | 85 | 15 | SAP4 |
| Sample 3A | 75 | 25 | SAP4 |
| Sample 4A | 65 | 35 | SAP4 |
| Sample 5A | 100 | 0 | SAP1 |
| Sample 6A | 85 | 15 | SAP1 |
| Sample 7A | 75 | 25 | SAP1 |
| Sample 8A | 65 | 35 | SAP1 |
| Sample 9A | 100 | 0 | CUBITRON |
| Sample 10A | 85 | 15 | CUBITRON |
| Sample 11A | 75 | 25 | CUBITRON |
| Sample 12A | 65 | 35 | CUBITRON |
| Sample 8B | 100 | 0 | SAP1 |
| Sample 7B | 75 | 25 | SAP2 |
| Sample 6B | 100 | 0 | SAP2 |
| Sample 5B | 75 | 25 | SAP4 |
| Sample 4B | 100 | 0 | SAP4 |
| Sample 3B | 75 | 25 | SAP3 |
| Sample 2B | 85 | 15 | SAP3 |
| Sample 1B | 100 | 0 | SAP3 |

### Example 2. Testing of unitized wheels.

The Abrasion Test measured the abrasive efficiency of comparative test wheels and was conducted using a dual-spindle automated machine. A 6-inch (15.24-centimeter) diameter 0.5-inch (1.27-centimeter) thick test wheel mounted on one spindle and a 2.0-inch (5.08-centimeter) diameter by 0.125-inch (3.175-millimeter) thick carbon steel tube workpiece mounted on the other spindle. The workpiece was set to rotate at 32 revolutions per minute and the abrasive wheel was set to rotate at 3600 revolutions per minute. The abrasive wheel and the workpiece could be urged together at a load of 8 pounds (3.63 kilograms). During the test, the end of the pre-weighed rotating tube was urged against the pre-weighed wheel at the selected test load for 15-second intervals followed by a noncontact period of 15 seconds. Each Abrasion Test ran for a total of 30 minutes with the total time the workpiece contacted the wheel being 15 minutes. Total Cut was determined by the weight loss of the workpiece and the Wheel Wear was determined by the weight loss of the abrasive wheel. Results were reported as Cut and Wear in grams for each test wheel. The grams of steel cut, and the grams of wheel worn, are illustrated in Table 4.

**Table 4. Test results.**

| **Wheel** | **Cut (gm steel)** | **Wear (gm Wheel)** | **Abrasive Particle** | **FIB1 (wt% of total fiber)** | **FIB2 (wt% of total fiber)** |
|---|---|---|---|---|---|
| Sample 1A | 24.4 | 2.4 | SAP4 | 100 | 0 |
| Sample 2A | 20.6 | 1.6 | SAP4 | 85 | 15 |
| Sample 3A | 20.4 | 1.3 | SAP4 | 75 | 25 |
| Sample 4A | 19.6 | 0.8 | SAP4 | 65 | 35 |
| Sample 5A | 58.5 | 9.2 | SAP1 | 100 | 0 |
| Sample 6A | 52 | 3.3 | SAP1 | 85 | 15 |
| Sample 7A | 42 | 1.3 | SAP1 | 75 | 25 |
| Sample 8A | 40.4 | 1.1 | SAP1 | 65 | 35 |
| Sample 9A | 31.3 | 1.1 | CUBITRON | 100 | 0 |
| Sample 10A | 32.8 | 1.3 | CUBITRON | 85 | 15 |
| Sample 11A | 26.8 | 1.3 | CUBITRON | 75 | 25 |
| Sample 12A | 28.6 | 1.1 | CUBITRON | 65 | 35 |
| Sample 8B | 51.9 | 11.3 | SAP1 | 100 | 0 |
| Sample 7B | 33.3 | 0.5 | SAP2 | 75 | 25 |
| Sample 6B | 42.1 | 4 | SAP2 | 100 | 0 |
| Sample 5B | 20.8 | 0.6 | SAP4 | 75 | 25 |
| Sample 4B | 23.3 | 1.4 | SAP4 | 100 | 0 |
| Sample 3B | 27.3 | 0.4 | SAP3 | 75 | 25 |
| Sample 2B | 27.3 | 0.3 | SAP3 | 85 | 15 |
| Sample 1B | 33.8 | 2.2 | SAP3 | 100 | 0 |
| Sample 1B | 29.6 | 2.2 | SAP3 | 100 | 0 |
| Sample 3B | 25.8 | 0.5 | SAP3 | 75 | 25 |
| Sample 4B | 20.2 | 0.8 | SAP4 | 100 | 0 |
| Sample 5B | 18.2 | 0.3 | SAP4 | 75 | 25 |
| Sample 8B | 52.6 | 6.7 | SAP1 | 100 | 0 |

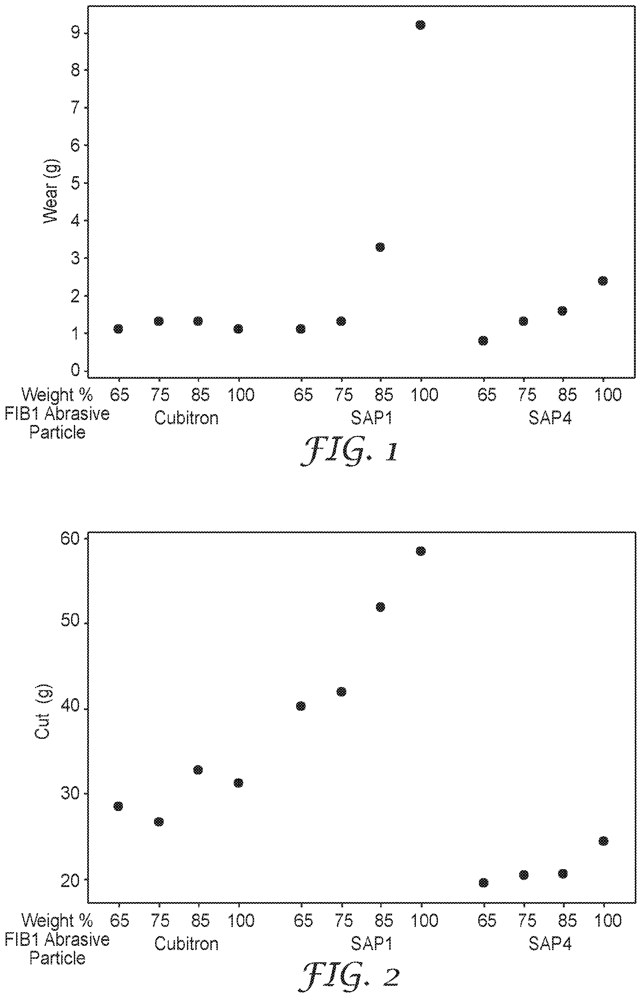

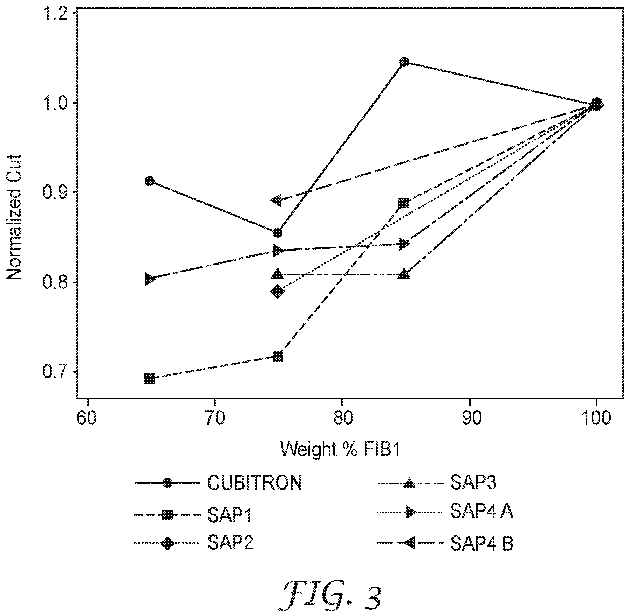

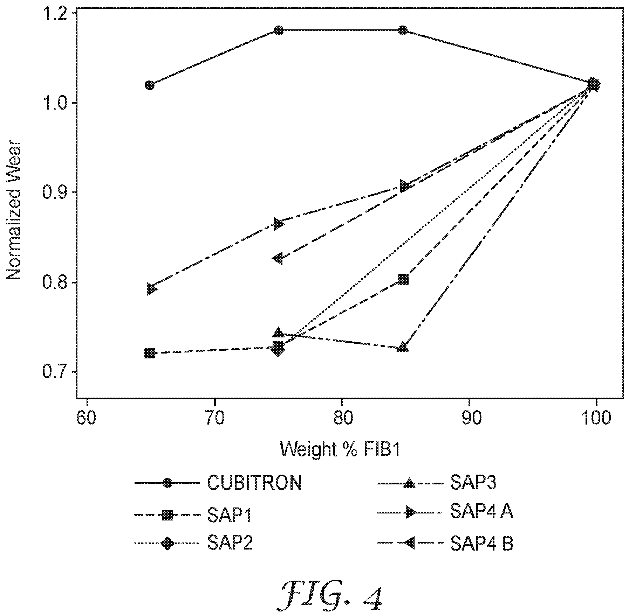

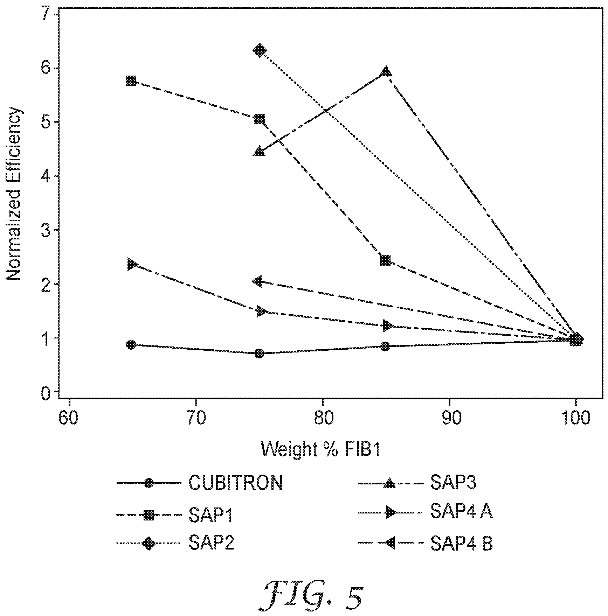

FIG. 1 is a plot illustrating wear of the wheel sample versus wt% 15 denier fiber in the prebond of the wheel, for various sizes of abrasive particles. FIG. 2 is a plot illustrating cut of steel versus wt% FIB 1 (wt% of total fiber), for various sizes of abrasive particles. Table 5 gives normalized values for cut, wear, and efficiency (cut divided by wear), with values for cut and wear normalized to a value of 1 for prebonds containing 100% FIB1 for each different abrasive particle, with the remaining fiber blends' cut and wear values being a ratio of the 100% FIB1 cut and wear values. FIG. 3 illustrates normalized cut versus wt% FIB1 (wt% of total fiber). FIG. 4 illustrates normalized wear versus wt% FIB1 (wt% of total fiber). FIG. 5 illustrates normalized efficiency versus wt% FIB 1.

**Table 5. Normalized test results.**

| **Wheel** | **Cut (gm steel )** | **Wear (gm Wheel )** | **Abrasive Particle** | **FIB1 (wt % of total fiber )** | **Normalize d Cut** | **Normalize d Wear** | **Efficienc y** | **Normalize d Efficiency** |
|---|---|---|---|---|---|---|---|---|
| Sample 1A | 24.4 | 2.4 | SAP4 | 100 | 1.00 | 1.00 | 10.17 | 1.00 |
| Sample 2A | 20.6 | 1.6 | SAP4 | 85 | 0.84 | 0.67 | 12.88 | 1.27 |
| Sample 3A | 20.4 | 1.3 | SAP4 | 75 | 0.84 | 0.54 | 15.69 | 1.54 |
| Sample 4A | 19.6 | 0.8 | SAP4 | 65 | 0.80 | 0.33 | 24.50 | 2.41 |
| Sample 5A | 58.5 | 9.2 | SAP1 | 100 | 1.00 | 1.00 | 6.36 | 1.00 |
| Sample 6A | 52 | 3.3 | SAP1 | 85 | 0.89 | 0.36 | 15.76 | 2.48 |
| Sample 7A | 42 | 1.3 | SAP1 | 75 | 0.72 | 0.14 | 32.31 | 5.08 |
| Sample 8A | 40.4 | 1.1 | SAP1 | 65 | 0.69 | 0.12 | 36.73 | 5.78 |
| Sample 9A | 31.3 | 1.1 | CUBITRO N | 100 | 1.00 | 1.00 | 28.45 | 1.00 |
| Sample 10A | 32.8 | 1.3 | CUBITRO N | 85 | 1.05 | 1.18 | 25.23 | 0.89 |
| Sample 11A | 26.8 | 1.3 | CUBITRO N | 75 | 0.86 | 1.18 | 20.62 | 0.72 |
| Sample 12A | 28.6 | 1.1 | CUBITRO N | 65 | 0.91 | 1.00 | 26.00 | 0.91 |
| Sample 7B | 33.3 | 0.5 | SAP2 | 75 | 0.79 | 0.13 | 66.60 | 6.33 |
| Sample 6B | 42.1 | 4 | SAP2 | 100 | 1.00 | 1.00 | 10.53 | 1.00 |
| Sample 5B | 20.8 | 0.6 | SAP4 | 75 | 0.89 | 0.43 | 34.67 | 2.08 |
| Sample 4B | 23.3 | 1.4 | SAP4 | 100 | 1.00 | 1.00 | 16.64 | 1.00 |
| Sample 3B | 27.3 | 0.4 | SAP3 | 75 | 0.81 | 0.18 | 68.25 | 4.44 |
| Sample 2B | 27.3 | 0.3 | SAP3 | 85 | 0.81 | 0.14 | 91.00 | 5.92 |
| Sample 1B | 33.8 | 2.2 | SAP3 | 100 | 1.00 | 1.00 | 15.36 | 1.00 |

### Example 3. Comparison of pore size to abrasive particle size.

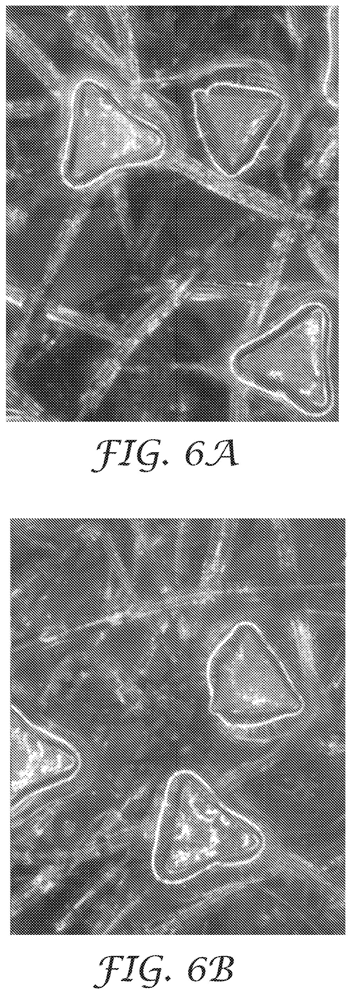

Prebonds were prepared as laid out in Example 1, Preparation of prebonds. They were then compressed to a thickness of 0.125" (0.318 cm) between two glass slides. Abrasive particles having a size of SAP3were glued to one of the glass slides. Photomicrographs of each slide were taken using Keyence at 200X. The photomicrographs are shown in FIGS. 6A-B, where FIG. 6A has fibers that are 100 wt% FIB1 and FIG. 6B has fibers that are 25 wt% FIB2 and 75 wt% FIB 1. The pores between the fibers appeared larger in the prebond shown in FIG. 6A which had 100 wt% FIB1.

## Claims

1. A nonwoven abrasive article comprising:
a nonwoven web comprising first fibers having a first diameter and second fibers having a second diameter, wherein the first diameter is different than the second diameter; and
abrasive particles distributed throughout at least a portion of the nonwoven web;
**characterized in that** the abrasive particles are shaped particles; and
the first fibers have a denier of at least 1 and no greater than 10, the second fibers have a denier of at least 10,
the first fibers are at least 10 wt% and no greater than 35 wt% of the fibers in the nonwoven web, and
the second fibers are at least 65 wt% and no greater than 90 wt% of the fibers in the nonwoven web.

2. The nonwoven abrasive article of claim 1, wherein
the first fibers are at least 15 wt% and no greater than 35 wt% of the fibers in the nonwoven web, and
the second fibers are at least 65 wt% and no greater than 85 wt% of the fibers in the nonwoven web.

3. The nonwoven abrasive article of claim 1, wherein at least a portion of the abrasive particles comprise one or more substantially flat faces.

4. The nonwoven abrasive article of claim 3, wherein the substantially flat face is contacted by one or more of the fibers of the nonwoven web that are substantially parallel to the flat face.

5. The nonwoven abrasive article of claim 3, wherein each of the substantially flat faces is independently contacted by one or more of the fibers of the nonwoven web that are substantially parallel to the respective flat face.

6. The nonwoven abrasive article of claim 3, wherein the abrasive particles have a particle size of 10 microns to 750 microns.

7. The nonwoven abrasive article of claim 1, wherein the abrasive particles comprise a perimeter that is polygonal.

8. The nonwoven abrasive article of claim 1, wherein the abrasive particles comprise a perimeter that is triangular, rectangular, circular, elliptical, trapezoidal, pentagonal, or star-shaped.

9. The nonwoven abrasive article of claim 1, further comprising a binder adhering the abrasive particles to the fibers of the nonwoven web.

10. The nonwoven abrasive article of claim 1, comprising one or more compressed bonded layers of the nonwoven web.

11. The nonwoven abrasive article of claim 1, wherein the nonwoven abrasive article is a unitized abrasive wheel.

12. The nonwoven abrasive article of claim 1, wherein a 15.2-cm (6.0-inch) diameter 1.27 cm (0.5-inch) width test wheel having the same composition as the nonwoven abrasive article of claim 1 tested on a 0.32-cm (1/8-inch) diameter carbon steel tube workpiece over 30 minutes, using 3.63 kg (8 pounds) of force, at 3600 rotations per minute, 15 seconds on and 15 seconds off, has a wear of 1 g to 20 g of the test wheel.

13. The nonwoven abrasive article of claim 1, wherein a 15.2-cm (6.0-inch) diameter 1.27-cm (0.5-inch) width test wheel having the same composition as the nonwoven abrasive article of claim 1 tested on a 0.32-cm (1/8-inch) diameter carbon steel tube workpiece over 30 minutes, using 3.63 kg (8 pounds) of force, at 3600 rotations per minute, 15 seconds on and 15 seconds off, cuts 10 g to 100 g of the carbon steel tube workpiece.

14. The nonwoven abrasive article of claim 1, wherein the nonwoven abrasive article has a density of 0.183 g/cm³ (3 g/ in³) to 1.404 g/cm³ (23 g/in³).

15. A method of making the nonwoven abrasive article of claim 1, the method comprising:
forming a prebond comprising a resin and the fibers;
coating the shaped abrasive particles onto the prebond;
compressing the coated prebond; and
curing the compressed prebond, thereby forming the nonwoven abrasive article of claim 1.

## Patentansprüche

1. Ein Vliesschleifgegenstand aufweisend:
eine Vliesbahn, aufweisend erste Fasern, die einen ersten Durchmesser haben, und zweite Fasern, die einen zweiten Durchmesser haben, wobei sich der erste Durchmesser von dem zweiten Durchmesser unterscheidet; und
Schleifteilchen, die über mindestens einen Abschnitt der Vliesbahn verteilt sind;
**dadurch gekennzeichnet, dass** die Schleifteilchen geformte Teilchen sind; und
die ersten Fasern ein Denier von mindestens 1 und höchstens 10 haben, die zweiten Fasern
ein Denier von mindestens 10 haben,
die ersten Fasern mindestens 10 Gew.-% und höchstens 35 Gew.-% der Fasern in der Vliesbahn betragen und
die zweiten Fasern mindestens 65 Gew.-% und höchstens 90 Gew.-% der Fasern in der Vliesbahn betragen.

2. Der Vliesschleifgegenstand nach Anspruch 1, wobei
die ersten Fasern mindestens 15 Gew.-% und höchstens 35 Gew.-% der Fasern in der Vliesbahn betragen und
die zweiten Fasern mindestens 65 Gew.-% und höchstens 85 Gew.-% der Fasern in der Vliesbahn betragen.

3. Der Vliesschleifgegenstand nach Anspruch 1, wobei mindestens ein Abschnitt der Schleifteilchen eine oder mehrere im Wesentlichen flache Flächen aufweist.

4. Der Vliesschleifgegenstand nach Anspruch 3, wobei die im Wesentlichen flache Fläche durch eine oder mehrere der Fasern der Vliesbahn berührt wird, die im Wesentlichen parallel zu der flachen Fläche sind.

5. Der Vliesschleifgegenstand nach Anspruch 3, wobei jede der im Wesentlichen flachen Flächen unabhängig durch eine oder mehrere Fasern der Vliesbahn berührt wird, die im Wesentlichen parallel zu der jeweiligen flachen Fläche sind.

6. Der Vliesschleifgegenstand nach Anspruch 3, wobei die Schleifteilchen eine Teilchengröße von 10 Mikrometer bis 750 Mikrometer haben.

7. Der Vliesschleifgegenstand nach Anspruch 1, wobei die Schleifteilchen einen Umfang aufweisen, der polygonal ist.

8. Der Vliesschleifgegenstand nach Anspruch 1, wobei die Schleifteilchen einen Umfang aufweisen, der dreieckig, rechteckig, zirkulär, elliptisch, trapezförmig, fünfeckig oder sternförmig ist.

9. Der Vliesschleifgegenstand nach Anspruch 1, ferner aufweisend ein Bindemittel, das die Schleifteilchen an die Fasern der Vliesbahn haftet.

10. Der Vliesschleifgegenstand nach Anspruch 1, aufweisend eine oder mehrere komprimierte gebundene Schichten der Vliesbahn.

11. Der Vliesschleifgegenstand nach Anspruch 1, wobei der Vliesschleifgegenstand eine Kompaktschleifscheibe ist.

12. Der Vliesschleifgegenstand nach Anspruch 1, wobei eine Testscheibe mit 15,2 cm (6,0 Zoll) Durchmesser, 1,27 cm (0,5 Zoll) Breite, die die gleiche Zusammensetzung wie der Vliesschleifgegenstand nach Anspruch 1 hat, getestet an einem Kohlenstoffstahlrohrwerkstück mit 0,32 cm (1/8 Zoll) Durchmesser über 30 Minuten, unter Verwendung einer Kraft von 3,63 kg (8 Pfund), bei 3600 Umdrehungen pro Minute, 15 Sekunden an und 15 Sekunden aus, einen Verschleiß von 1 g bis 20 g der Testscheibe hat.

13. Der Vliesschleifgegenstand nach Anspruch 1, wobei eine Testscheibe mit 15,2 cm (6,0 Zoll) Durchmesser, 1,27 cm (0,5 Zoll) Breite, die die gleiche Zusammensetzung wie der Vliesschleifgegenstand nach Anspruch 1 hat, getestet an einem Kohlenstoffstahlrohrwerkstück mit 0,32 cm (1/8 Zoll) Durchmesser über 30 Minuten, unter Verwendung der Kraft von 3,63 kg (8 Pfund), bei 3600 Umdrehungen pro Minute, 15 Sekunden an und 15 Sekunden aus, 10 g bis 100 g des Kohlenstoffstahlrohrwerkstücks schneidet.

14. Der Vliesschleifgegenstand nach Anspruch 1, wobei der Vliesschleifgegenstand eine Dichte von 0,183 g/cm³ (3 g/in³) bis 1,404 g/cm³ (23 g/in³) hat.

15. Ein Verfahren zum Herstellen des Vliesschleifgegenstands nach Anspruch 1, das Verfahren aufweisend: Bilden einer Vorbindung, aufweisend ein Harz und die Fasern;
Beschichten der geformten Schleifteilchen auf die Vorbindung;
Komprimieren der beschichteten Vorbindung; und
Aushärten der komprimierten Vorbindung, wobei dadurch der Vliesschleifgegenstand nach Anspruch 1 gebildet wird.

## Revendications

1. Article abrasif non tissé comprenant :
une bande non tissée comprenant des premières fibres ayant un premier diamètre et des secondes fibres ayant un second diamètre, dans lequel le premier diamètre est différent du second diamètre ; et
des particules abrasives réparties sur au moins une partie de la bande non tissée ;
**caractérisé en ce que** les particules abrasives sont des particules façonnées ; et
les premières fibres ont un denier d'au moins 1 et d'au plus 10, les secondes fibres ont un denier d'au moins 10,
ont un denier d'au moins 10,
les premières fibres ont au moins 10 % en poids et pas plus de 35 % en poids des fibres dans la bande non tissée, et
les secondes fibres ont au moins 65 % en poids et pas plus de 90 % en poids des fibres dans la bande non tissée.

2. Article abrasif non tissé selon la revendication 1, dans lequel
les premières fibres ont au moins 15 % en poids et pas plus de 35 % en poids des fibres dans la bande non tissée, et
les secondes fibres ont au moins 65 % en poids et pas plus de 85 % en poids des fibres dans la bande non tissée.

3. Article abrasif non tissé selon la revendication 1, dans lequel au moins une partie des particules abrasives comprend une ou plusieurs faces sensiblement plates.

4. Article abrasif non tissé selon la revendication 3, dans lequel la face sensiblement plate est en contact avec une ou plusieurs des fibres de la bande non tissée qui sont sensiblement parallèles à la face plate.

5. Article abrasif non tissé selon la revendication 3, dans lequel chacune des faces sensiblement plates est indépendamment en contact avec une ou plusieurs des fibres de la bande non tissée qui sont sensiblement parallèles à la face plate respective.

6. Article abrasif non tissé selon la revendication 3, dans lequel les particules abrasives ont une taille de particule de 10 microns à 750 microns.

7. Article abrasif non tissé selon la revendication 1, dans lequel les particules abrasives comprennent un périmètre polygonal.

8. Article abrasif non tissé selon la revendication 1, dans lequel les particules abrasives comprennent un périmètre triangulaire, rectangulaire, circulaire, elliptique, trapézoïdal, pentagonal ou en forme d'étoile.

9. Article abrasif non tissé selon la revendication 1, comprenant en outre un liant adhérant aux particules abrasives aux fibres de la bande non tissée.

10. Article abrasif non tissé selon la revendication 1, comprenant une ou plusieurs couches liées comprimées de la bande non tissée.

11. Article abrasif non tissé selon la revendication 1, dans lequel l'article abrasif non tissé est une meule abrasive unitaire.

12. Article abrasif non tissé selon la revendication 1, dans lequel une meule de test de15,2 cm (6,0 pouces) de diamètre et de 1,27 cm (0,5 pouce) de largeur ayant la même composition que l'article abrasif non tissé selon la revendication 1, testée sur une pièce en tube d'acier ordinaire de 0,32 cm (1/8 pouce) de diamètre pendant 30 minutes, à l'aide d'une force de 3,63 kg (8 livres), à 3600 rotations par minute, 15 secondes de marche et 15 secondes d'arrêt, a une usure de 1 g à 20 g de la meule de test.

13. Article abrasif non tissé selon la revendication 1, dans lequel une meule de test de 15,2 cm (6,0 pouces) de diamètre et de 1,27 cm (0,5 pouce) de largeur ayant la même composition que l'article abrasif non tissé selon la revendication 1, testée sur une pièce en tube d'acier ordinaire de 0,32 cm (1/8 pouce) de diamètre pendant 30 minutes, à l'aide d'une force de 3,63 kg (8 livres), à 3600 rotations par minute, 15 secondes de marche et 15 secondes d'arrêt, coupe de 10 g à 100 g de la pièce en tube d'acier ordinaire.

14. Article abrasif non tissé selon la revendication 1, dans lequel l'article abrasif non tissé a une densité de 0,183 g/cm³ (3 g/ in³) à 1,404 g/cm³ (23 g/in³).

15. Procédé de fabrication de l'article abrasif non tissé selon la revendication 1, comprenant : la formation d'un pré-liant comprenant une résine et les fibres ;
le revêtement des particules abrasives façonnées sur le pré-liant ;
la compression du pré-liant revêtu ; et
le durcissement du pré-liant comprimé, formant ainsi l'article abrasif non tissé selon la revendication 1.
